# EUROPÄISCHE PATENTSCHRIFT

(11) **EP 2 139 733 B1**
(45) Veröffentlichungstag und Bekanntmachung des Hinweises auf die Patenterteilung: **15.05.2013**
(21) Anmeldenummer: 08718055.0
(22) Anmeldetag: 19.03.2008
(51) Int. Cl.: B60T 8/40

(54) **BREMSANLAGE FÜR KRAFTFAHRZEUGE**
BRAKING SYSTEM FOR MOTOR VEHICLES
SYSTÈME DE FREINAGE POUR VÉHICULE AUTOMOBILE

(30) Priorität: 19.04.2007 DE 102007018895; 17.10.2007 DE 102007049620
(43) Veröffentlichungstag der Anmeldung: 06.01.2010
(73) Patentinhaber: Continental Teves AG & Co. oHG, 60488 Frankfurt (DE)
(72) Erfinder: DRUMM, Stefan A., 55291 Saulheim (DE); SCHIEL, Lothar, 65719 Hofheim (DE)
(86) Internationale Anmeldenummer: PCT/EP2008/053334
(87) Internationale Veröffentlichungsnummer: WO 2008/128835

(56) Entgegenhaltungen:
- EP-A- 1 078 833
- WO-A-01/72567
- WO-A-02/064409
- WO-A-2006/042823
- DE-A1- 3 028 894
- DE-A1- 10 258 266

## Beschreibung

Die Erfindung betrifft eine Bremsanlage für Kraftfahrzeuge mit einem Hauptzylinder, an den Radbremszylinder anschließ bar sind, einem ersten Kolben, der über eine Betätigungskräfte übertragende Druckstange mit einem Bremspedal gekoppelt ist, einem zweiten Kolben, der den Hauptzylinder betätigt, einem dritten Kolben, der vom ersten Kolben betätigbar ist, und der in eine kraftübertragende Verbindung mit dem zweiten Kolben bringbar ist, mit mindestens einem elastischen Element, das einen Pedalwegsimulator bildet, der in der Betriebsart "brake-by-wire" dem Fahrzeugführer ein angenehmes Pedalgefühl vermittelt, mit Mitteln zum Koppeln der Bewegungen des ersten und des zweiten Kolbens, mit einem mit hydraulischem Druck beaufschlagbaren Zwischenraum zwischen dem zweiten und dem dritten Kolben, wobei eine Druckbeaufschlagung des Zwischenraums den zweiten und den dritten Kolben in entgegen gesetzten Richtungen belastet, mit einem elektrisch steuerbaren Druckbereitstellungs einrichtung, die sowohl ein Befüllen des Zwischenraums mit Druckmittel als auch dessen Entleeren ermöglicht, sowie mit einer Ventileinrichtung, mit der der im Zwischenraum eingesteuerte Druck veränderbar ist und die eine Hochdruckquelle aufweist.

In der Kraftfahrzeugtechnik finden "Brake-by-wire"-Bremssysteme eine immer größere Verbreitung. Bei diesen Bremssystemen kann die Bremse auch ohne aktives Zutun des Fahrers aufgrund elektronischer Signale "fremd-" betätigt werden. Diese elektronischen Signale können beispielsweise von einem elektronischen Stabilitätsprogramm ESP oder einem Abstandsregelsystem ACC ausgegeben werden. Kommt es zu einer Überlagerung einer derartigen Fremdbetätigung mit einer Fahrerbetätigung, so spürt der Fahrer des Kraftfahrzeugs eine Rückwirkung im Bremspedal. Dieser Rückwirkungseffekt auf das Bremspedal kann für den Fahrer überraschend und unangenehm sein, so dass der Fahrer in einer kritischen Situation des Straßenverkehrs das Bremspedal nicht in einem dieser Situation angepassten Maße betätigt, da er durch die von der Fremdbetätigung der Bremse verursachte Rückwirkung auf das Bremspedal irritiert wird.

Eine Bremsanlage der eingangs genannten Gattung ist aus der internationalen Patenanmeldung WO 2006/042823 A1 bekannt. Um eine Unterstützung der Betätigungskraft auch bei einem Ausfall der Steuerelektronik oder der elektrischen Energieversorgung zu ermöglichen ist bei der vorbekannten Bremsanlage zwischen dem ersten und dem dritten Kolben ein vierter Kolben angeordnet, der im Zusammenspiel mit dem dritten Kolben eine hydraulische Kammer begrenzt, die eine durch eine Bremspedalbetätigung sperrbare hydraulische Verbindung zu einem Druckmittelvorratsbehälter aufweist und in der durch die Betätigungskräfte Druck aufgebaut werden kann, wobei durch den in der Kammer eingesteuerten hydraulischen Druck eine Ventilanordnung ansteuerbar ist, mit der der im Zwischenraum eingesteuerte Druck veränderbar ist. Als nachteilig wird bei der vorbekannten Bremsanlage die Tatsache empfunden, dass das Abschalten des Pedalwegsimulators abhängig vom Verfahrweg des dritten Kolbens erfolgt, der bei der Betätigung einen Verlustweg darstellt.

Aus der EP 1 078 833 A2 ist eine Kopplung des zweiten und dritten Kolbens bei fehlender Druckversorgung mittels der Verschiebung des dritten Kolbens. Da die beiden Kolben bei funktionierender Druckversorgung nicht miteinander gekoppelt sind und durch einen Zwischenraum voneinander getrennt sind, erfolgt die Kopplung der Kolben auch abhängig vom Verfahrweg des dritten Kolbens, der bei der Betätigung einen Verlustweg darstellt.

Aus der DE 102 58 266 A1 ist ferner eine Betätigungseinheit zu entnehmen, welche eine an den Bremskreis anschliessbaren Hilfsdruckquelle, einen mittels eines pedalbetätigten Betätigungsglieds betätigbaren Hauptbremszylinder, der wenigstens einen Druckkolben aufweist, dessen eine Stirnseite einen Druckraum begrenzt, der mittels eines sperrbaren Trennventils an den Bremskreis anschliessbar ist, einen drucklosen Druckmittel-Vorratsbehälter, der bei nicht betätigtem Hauptbremszylinder in Verbindung mit dem Druckraum steht, und eine eine Simulatorfeder und eine mittels eines Sperrventils hydraulisch sperrbaren Simulatorkammer aufweisende Einrichtung zur Pedalwegsimulation umfasst. Aus der DE 102 58 266 A1 sind keine Mittel zum Koppeln der Bewegungen des ersten und des zweiten Kolbens und keine Ventileinrichtung, mit der der im Zwischenraum eingesteuerte Druck veränderbar ist, bekannt.

Es ist daher Aufgabe der vorliegenden Erfindung, eine Bremsanlage der eingangs genannten Gattung vorzuschlagen, bei der das Ab- sowie das Zuschalten des Pedalwegsimulators ohne bei der Betätigung am Bremspedal spürbare Verlustwege erfolgt.

Diese Aufgabe wird erfindungsgemäß durch die Merkmale des Patentanspruchs 1 gelöst.

Erfindungsgemäß ist mindestens ein weiterer (vierter) Kolben vorgesehen, der mit dem von der Druckbereitstellungseinrichtung bereit gestellten hydraulischen Druck beaufschlagbar ist und der eine Bewegung des ersten Kolbens im Sinne der Betätigung des Pedalwegsimulators ermöglicht bzw. verhindert.

Weitere vorteilhafte Ausführungen des erfindungsgemäßen Bremssystems sind in den Unteransprüchen 2 bis 22 aufgeführt.

Die vorliegende Erfindung wird nachfolgend an zwei Ausführungsbeispielen unter Bezugnahme auf die beiliegende schematische Zeichnung näher erläutert, wobei übereinstimmende Komponenten mit den gleichen Bezugszeichen versehen sind. In der Zeichnung zeigen:
Fig. 1 den Aufbau einer ersten Ausführung der erfindungsgemäßen Bremsanlage;
Fig. 2 die Betätigungseinrichtung gemäß Fig. 1 in vergrößertem Maßstab; und
Fig. 3 den Aufbau einer zweiten Ausführung der erfindungsgemäßen Bremsanlage.

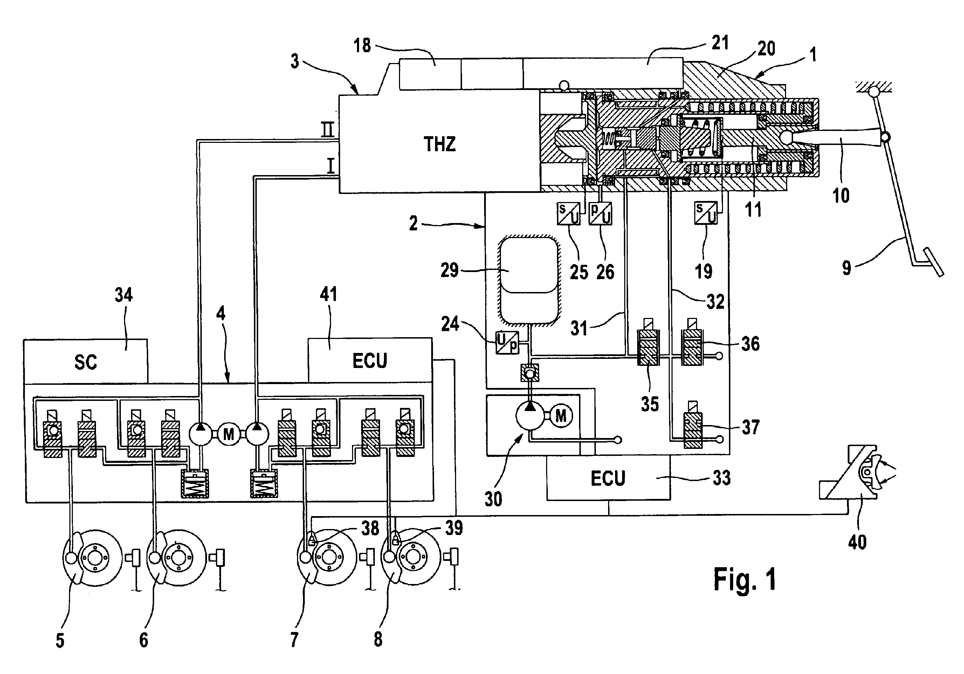

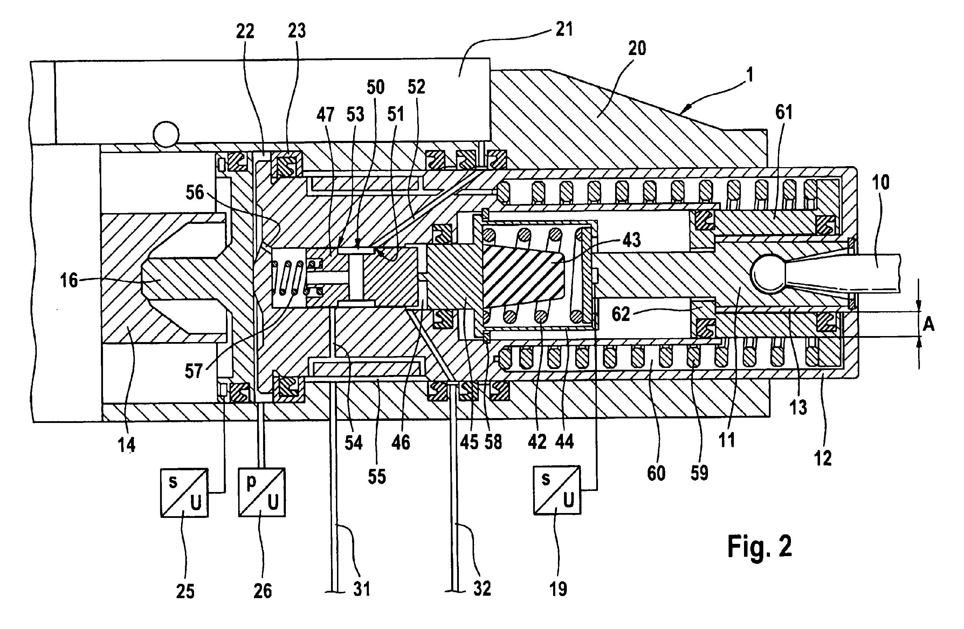

Die in den Figuren 1 und 2 dargestellte erste Ausführungsform der erfindungsgemäßen Bremsanlage besteht im Wesentlichen aus einer Betätigungseinrichtung 1, einer Druckbereitstellungseinrichtung 2, wobei die Betätigungseinheit und die Druckbereitstellungseinrichtung einen Bremskraftverstärker bilden, sowie einem dem Bremskraftverstärker wirkungsmäßig nachgeschalteten Hauptbremszylinder bzw. Tandemhauptzylinder 3, dessen nicht dargestellte Druckräume mit den unter Atmosphärendruck stehenden Kammern eines ersten Druckmittelvorratsbehälters 18 verbindbar sind. Andererseits sind an die Druckräume Radbremskreise L, II angeschlossen, die unter Zwischenschaltung eines bekannten ABS- oder ESP-Hydroaggregats bzw. eines elektrisch steuerbaren Radbremsdruckmodulationsmoduls 4 die Radbremsen 5 - 8 eines Kraftfahrzeuges mit hydraulischem Druckmittel versorgen. Die Radbremsen 7, 8 sind vorzugsweise mit elektrischen Betätigungselementen 38, 39 ausgestattet, die mittels eines Parkbremsschalters 40 ansteuerbar sind und mit denen eine Feststellbremsfunktion realisiert werden kann. Ein lediglich schematisch angedeuteter Sensorcluster 34, der einen nicht gezeigten Querbeschleunigungssensor sowie einen Gierratensensor enthält, dient in Kombination mit dem vorhin erwähnten Radbremsdruckmodulationsmodul 4 der Realisierung einer elektronischen Stabilitätsfunktion (ESP). Dem Radbremsdruckmodulationsmodul 4 ist eine elektronische Steuer- und Regeleinheit 41 zugeordnet. Die Betätigungseinrichtung 1, die in einem Gehäuse 20 angeordnet ist, an das der Tandemhauptzylinder 3 angeschlossen ist, ist über ein Bremspedal 9 ansteuerbar, das über eine Betätigungsstange 10 mit einem ersten Kolben 11 der Betätigungseinrichtung 1 mechanisch gekoppelt ist. Der Betätigungsweg des Bremspedals 9 wird mittels eines Wegsensors 19 erfasst, der den Weg des ersten Kolbens 11 sensiert. Zum gleichen Zweck kann jedoch auch ein Drehwinkelsensor verwendet werden, der den Drehwinkel des Bremspedals 9 erfasst.

Die vorhin erwähnte Druckbereitstellungseinrichtung 2 umfasst eine, als Motor-Pumpen-Aggregat ausgebildete hydraulische Hochdruckquelle 30, optional einen Hochdruckspeicher 29, Druckregelventile 35, 36, 37 sowie einen zweiten Druckmittelvorratsbehälter 21, der beispielsweise am Gehäuse 20 der Betätigungseinheit 1 angeordnet sein kann und vorzugsweise mit dem ersten Druckmittelvorratsbehälter 18 eine Baueinheit bildet. Der Überwachung des von der Hochdruckquelle 30 abgegebenen Drucks dient ein Drucksensor 24, der ebenfalls in der Druckbereitstellungseinrichtung 2 integriert sein kann. Der Hochdruckspeicher 29 liefert die Energie zur Bremsenbetätigung, wenn das Motor-Pumpen-Aggregat der Hochdruckquelle 30 aufgrund der Massenträgheit seines Rotors die beispielsweise für eine plötzliche Vollbremsung notwendige Pumpleistung nicht sofort bereitstellen kann oder wenn keine elektrische Energie zum Antrieb des Motor-Pumpen-Aggregats zur Verfügung steht. Der Druckbereitstellungseinrichtung 2 ist eine elektronische Steuereinheit 33 zugeordnet, der u. a. Ausgangssignale des Wegsensors 19 sowie des Drucksensors 24 zugeführt werden und die der Ansteuerung des Motor-Pumpen-Aggregats 30 sowie der Druckregelventile 35 - 37 dient. Die Hochdruckquelle 30 ist mit der Betätigungseinheit 1 mittels einer hydraulischen Leitung verbunden, die mit dem Bezugszeichen 31 versehen ist, während der Leitungsabschnitt zwischen den Druckregelventilen 35, 36 ebenfalls mittels einer weiteren hydraulischen Leitung 32 an die Betätigungseinheit 1 angeschlossen ist. Die Funktion der beiden Leitungen 31, 32 ist in der folgenden Beschreibung näher erläutert.

Wie insbesondere Fig. 2 zu entnehmen ist, ist der erste Kolben 11 in einer Führung 13 eines zweiten Kolbens 12 verschiebbar geführt, der mit einem dritten Kolben 14 zusammen wirkt, der den Primärkolben des Tandemhauptzylinders 3 bilden kann, wobei im dargestellten Beispiel zwischen dem zweiten (12) und dem dritten Kolben 14 ein Druckübersetzungskolben 16 angeordnet ist. Zwischen dem zweiten Kolben 12 und dem Druckübersetzungskolben 16 ist ein Zwischenraum 22 begrenzt, durch dessen Beaufschlagen mit einem hydraulischen Druck der zweite Kolben 12 an einem im Gehäuse 20 ausgebildeten Anschlag 23 gehalten wird, während der Druckübersetzungskolben 16 und damit der Primärkolben 14 des Tandemhauptzylinders im Sinne eines Druckaufbaus im Tandemhauptzylinder 3 beaufschlagt werden. Eine aus dieser Belastung resultierende Bewegung des Druckübersetzungskolbens 16 wird mittels eines zweiten Wegsensors 25 erfasst. Der im Zwischenraum 22 eingesteuerte Druck wird mittels eines zweiten Drucksensors 26 erfasst. Ein elastisches Element bzw. eine Druckfeder 42 ist wirkungsmäßig zwischen dem ersten Kolben 11 und einem Kraftübertragungselement 45 angeordnet und bildet zusammen mit einer Elastomerfeder 43 einen Pedalwegsimulator, der dem Fahrzeugführer bei der Betätigung der Bremsanlage das gewohnte Pedalgefühl vermittelt, das einer üblichen Bremspedalcharakteristik entspricht. Dies bedeutet, dass bei geringem Bremspedalweg der Widerstand langsam ansteigt und bei größerem Bremspedalweg überproportional zunimmt. Zur mechanischen Führung des elastischen Elements 42 ist das dem Pedal zugewandte Ende des Kraftübertragungselements 45 als Hohlzylinder 44 ausgebildet. Das Kraftübertragungselement 45 ist im zweiten Kolben 12 abgedichtet verschiebbar geführt und begrenzt darin eine Vorsteuerkammer 46, an die über die vorhin erwähnte hydraulische Leitung 32 die Druckregelventile 35 - 37 angeschlossen sind, so dass in ihr ein Vorsteuerdruck eingesteuert werden kann, der durch geeignetes Ansteuern der Druckregelventile 35 - 37 eingestellt wird. Andererseits ist die Vorsteuerkammer 46 durch einen Ventilkörper 47 einer Druckregelventileinrichtung 50 begrenzt, die als ein Schieberventil ausgeführt ist und mit deren Hilfe der im Zwischenraum 22 eingesteuerte Druck variierbar ist. Eine erste Steuerkante 51 des Schieberventilkörpers 47 wirkt dabei mit der Mündung eines im zweiten Kolben 12 ausgebildeten Druckmittelkanals 52 zusammen, der eine Verbindung des Innenraums des Ventilkörpers 47 mit dem Druckmittelvorratsbehälter 21 ermöglicht. Eine zweite Steuerkante 53 des Ventilkörpers 47 wirkt dagegen mit der Mündung eines im zweiten Kolben 12 ausgebildeten weiteren Druckmittelkanals 54 zusammen, der in Verbindung mit einem vom zweiten Kolben 12 im Gehäuse 20 begrenzten Ringraum 55 steht, in den die vorhin erwähnte hydraulische Leitung 31 mündet. Ein weiterer Druckmittelkanal 56 verbindet den Innenraum des Ventilkörpers 47 mit dem Zwischenraum 22. In der in der Zeichnung gezeigten Ruhestellung des Ventilkörpers 47 liegt dieser unter der Vorspannung einer Ventilfeder 57 am Kraftübertragungselementes 45 an, welches sich an einem im zweiten Kolben 12 vorgesehenen Anschlag 58 abstützt.

Außerdem ist Fig. 2 zu entnehmen, dass im zweiten Kolben 12 ein hydraulischer Raum 60 vorgesehen ist, der mit dem vorhin erwähnten Ringraum 55 in Verbindung steht und der eine relativ stark ausgelegte Druckfeder 59 aufnimmt, die sich an einem koaxial zur Führung 13 verschiebbar angeordneten vierten Kolben 61 abstützt und diesen in Anlage am Ende der Führung 13 hält. Der Anlage des vierten Kolbens 61 dient ein radialer Kragen 62, an dem sich der erste Kolben 11 axial abstützt, so dass durch die Wirkung der starken Feder 59 eine Bewegung des ersten Kolbens 11 im Sinne der Betätigung des Pedalwegsimulators 42, 43 verhindert wird.

In einem ersten (Normal-) Betriebsmodus, d.h. in einer Hydraulikverstärker-Betriebsart, wird bei einem einwandfrei funktionierenden Bremssystem die mit "A" bezeichnete Ringfläche des vierten Kolbens 61 mit dem von der Hochdruckquelle 30 bereit gestellten Hochdruck beaufschlagt, so dass der vierte Kolben 61 sich in der Zeichnung nach links bewegt und den ersten Kolben 11 freigibt, so dass der Pedalwegsimulator 42, 43 betätigt wird und dem Fahrer das gewöhnliche Pedalgefühl vermittelt. Durch eine entsprechende Ansteuerung der Druckregelventile 35 - 37 wird die Vorsteuerkammer 46 mit einem Vorsteuerdruck beaufschlagt, so dass durch eine anschließende Verschiebung des Ventilkörpers 47 der zum Druckmittelvorratsbehälter 21 führende Druckmittelkanal 52 abgesperrt und der Druckmittelkanal 54 frei gegeben wird, so dass der Zwischenraum 22 mit einem geregelten Hochdruck beaufschlagt wird. Durch die Wirkung des Hochdrucks wird der zweite Kolben 12 an dem vorhin erwähnten Anschlag 23 gehalten und der Druckübersetzungskolben 16 in der Betätigungsrichtung des Hauptbremszylinders 3 verschoben. Ansonsten ist der Druck im Zwischenraum 22 frei wählbar, so dass jede gewünschte Abhängigkeit des Bremsdrucks von der Bremspedalbetätigung programmiert werden kann. Unerwünschte Pedalrückwirkungen sind dabei ausgeschlossen. Diese elektronische Betätigungsdruckregelung hat den Vorteil, dass ihr Übertragungsverhalten im Rahmen der durch die technischen Daten von Druckspeicher und Druckregelventilen gegebenen Dynamik frei wählbar ist. Daher können eine so genannte Springerfunktion, d.h. das Springen auf einen vorgegebenen Bremsdruckwert beim Antippen des Bremspedals 9, eine Bremsassistentenfunktion, eine Verzögerungsregelung und ein autonomes Bremsen, wie es beispielsweise für ASR (Antriebs- Schlupf-Regelung), ESP (Elektronisches Stabilitätsprogramm) und ACC (Adaptive Cruise Control) benötigt wird, durch Softwaremaßnahmen realisiert werden. Hierfür wird die Fahrervorgabe in Form einer Bremspedalbetätigung, die durch Weg-, Kraft- oder sonstige Sensoren erfasst und von einer nicht explizit dargestellten Recheneinheit durch Anwendung geeigneter Algorithmen in Radbremsdrücke umgerechnet, die mit Hilfe der elektronisch schaltbaren Ventile in der Druckbereitstellungseinrichtung 2 und dem nachgeschalteten ABS-ESP-Regelmodul 4 realisiert werden.

In einem zweiten Betriebsmodus, der einem Auftritt eines eine Fehlfunktion der Druckregelventile 35 - 37 verursachenden mechanischen und/oder elektrischen Fehlers und somit einer ersten Rückfallebene entspricht, kann in der Vorsteuerkammer 46 kein Vorsteuerdruck eingesteuert werden. In diesem Fall wird die Druckregelventileinrichtung 50 durch eine Übertragung der am Bremspedal 9 eingeleiteten Betätigungskraft auf das Kraftübertragungselement 44 betätigt, so dass der Zwischenraum 22 wie im vorhin beschriebenen Fall mit einem geregelten Hochdruck beaufschlagt wird.

In einem dritten Betriebsmodus, der durch das Fehlen eines von der hydraulischen Druckbereitstellungseinrichtung 2 erzeugten Druckes bzw. durch einen Ausfall der Hochdruckquelle 29 bzw. 30 charakterisiert ist, bei dem kein Hochdruck zur Verfügung gestellt wird und der einer zweiten Rückfallebene entspricht, erfolgt ein Druckaufbau im Hauptbremszylinder 3 durch eine rein mechanische Kraftübertragung zwischen dem ersten (11) bzw. dem zweiten Kolben 12 und dem Druckübersetzungskolben 16 bzw. dem dritten Kolben 14, bei der die vorhin genannte starke Feder 59 durch die Betätigungskraft zusammen gedrückt wird.

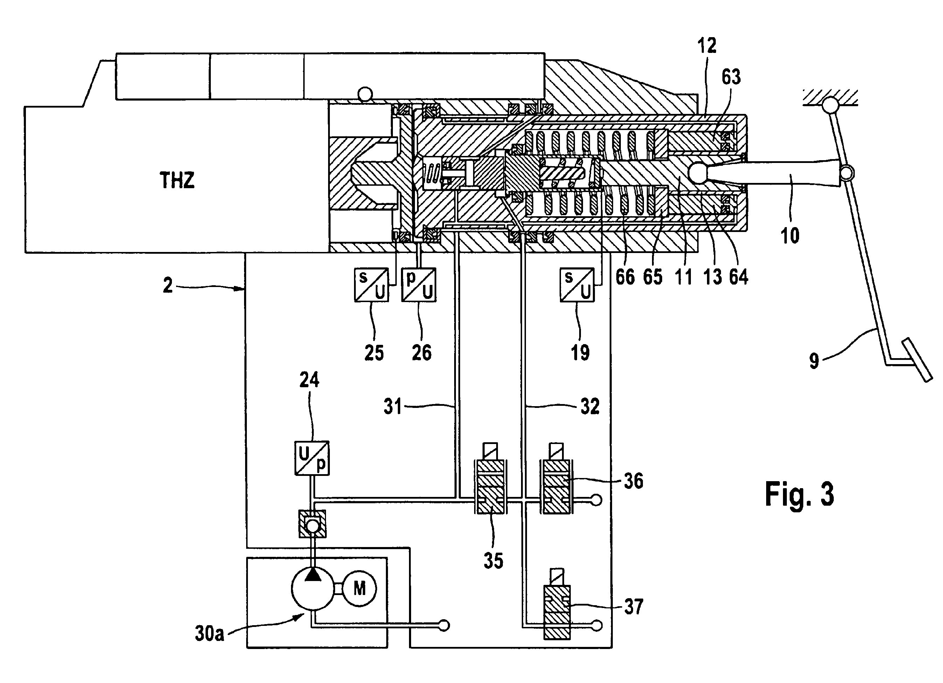

Der Aufbau der in Fig. 3 dargestellten zweiten Ausführungsform der erfindungsgemäßen Bremsanlage entspricht weitgehend dem der in Fig. 1 gezeigten ersten Ausführung. Als Hochdruckquelle dient ein Motor-Pumpen-Aggregat 30a. Ein weiterer Unterschied ist in der Ausbildung der Mittel zum Koppeln der Bewegungen des ersten (11) und des zweiten Kolbens (12) erkennbar, die durch mehrere, rund um die vorhin erwähnte Führung 13 des zweiten Kolbens 12 in regelmäßigen Winkelabständen angeordnete Kolben 63, 64, sowie eine mit den Kolben 63, 64 zusammen wirkende ringförmige Kraftübertragungsscheibe 65 gebildet sind. Die Kraftübertragungsscheibe 65 wird entgegen der Betätigungsrichtung des ersten Kolbens 11 durch eine Druckfeder 66 vorgespannt und liegt unter der Vorspannung dieser Druckfeder 66 an den Kolben 63, 64 sowie der Führung 13 und dem ersten Kolben 11 axial an. Im dargestellten Ausführungsbeispiel ist die Druckfeder 66 im trockenen Innenraum des zweiten Kolbens 12 angeordnet. Das Freischalten des ersten Kolbens 11 erfolgt, ähnlich wie bei der ersten Ausführung, durch ein Beaufschlagen der Kolben 63, 64 mit dem von der Hochdruckquelle 30a bereit gestellten Druck, das eine Bewegung der Kolben 63, 64 und somit der Kraftübertragungsscheibe 65 in der Zeichnung nach links zur Folge hat.

Durch die vorliegende Erfindung wird eine einfach aufgebaute Bremsanlage erreicht, bei der die Bremspedalcharakteristik nicht vom Betätigungszustand der restlichen Bremsanlage abhängt, wodurch das Pedalgefühl bei einer Fahrerbremsung weder durch das gleichzeitige Vorliegen einer Fremdbremsung noch durch andere Regelungsaktivitäten des Bremssystems wie Antiblockierregelung, Traktionskontrolle oder Fahrstabilitätsregelung gestört werden kann.

Die erfindungsgemäße Bremsanlage hat weiterhin den Vorteil, dass sie einfacher aufgebaut ist als herkömmliche Bremsanlagen. Fahrzeuge mit einer elektronischen Stabilitätsregelfunktion (ESP) benötigen beispielsweise eine spezielle ESP-Hydraulik, die komplizierter ist als eine normale ABS-Hydraulik, da sie im Gegensatz zur ABS-Hydraulik auch die Fähigkeit zum Aufbau von Radbremsdrücken oberhalb des Hauptzylinderdrucks besitzen muss.

Bei Fahrzeugen mit der erfindungsgemäßen Bremsanlage ist eine spezielle ESP-Hydraulik überflüssig - die erfindungsgemäße Fremdbremshydraulik in Verbindung mit einem herkömmlichen ABS-System erbringt eine weit bessere Funktion. Es werden weniger elektromagnetisch betätigbare Ventile benötigt als für eine herkömmliche ESP-Hydraulik. Außerdem weist die erfindungsgemäße Bremsanlage eine bessere Energiebilanz und eine geringere Geräuschentwicklung auf, als eine herkömmliche ESP-Hydraulik, weil das dort im ESP-Betrieb erforderliche Umpumpen von Bremsflüssigkeit zum Erzeugen von Staudruck an einem Druckbegrenzungsventil entfällt. Auch im Vergleich zum angegebenen Stand der Technik kann eine Verbesserung des Geräuschverhaltens erzielt werden, da innerhalb des vom Gehäuse umschlossenen Moduls, das im Fahrzeug mit der körperschallkritischen Spritzwand verbunden ist, keine geräuscherzeugenden Bauteile wie Ventile, Motoren oder Pumpen angeordnet sind.

Der Vorteil einer Aufrechterhaltung der Bremskraftverstärkung bei einem kurzzeitigen Ausfall der elektrischen Energieversorgung wird dadurch erreicht, dass lediglich der (Normal-)Betriebsmodus das Vorhandensein elektrischer Energie voraussetzt, wohingegen die Rückfallebenen nur hydraulische bzw. mechanische Energie benötigen.

## Patentansprüche

1. Bremsanlage für Kraftfahrzeuge mit
● einem Hauptzylinder (3), an den Radbremszylinder (5,6,7,8) anschließbar sind,
● einem ersten Kolben (11), der über eine Betätigungskräfte übertragende Druckstange (10) mit einem Bremspedal (9) gekoppelt ist,
● einem zweiten Kolben (12), der vom ersten Kolben (11) betätigbar ist, und der in eine kraftübertragende Verbindung mit
● einem dritten Kolben (14) bringbar ist, über den der Hauptzylinder (3) betätigt wird,
● mit mindestens einem elastischen Element (42,43), das einen Pedalwegsimulator bildet, der in der Betriebsart "brake-by-wire" dem Fahrzeugführer ein angenehmes Pedalgefühl vermittelt,
● mit Mitteln zum Koppeln der Bewegungen des ersten und des zweiten Kolbens, wodurch ein Zu- bzw. ein Abschalten des Pedalwegsimulators erfolgt,
● mit einem mit hydraulischem Druck beaufschlagbaren Zwischenraum (22) zwischen dem zweiten (12) und dritten Kolben (14), wobei eine Druckbeaufschlagung des Zwischenraums (22) den zweiten und den dritten Kolben (12, 14) in entgegen gesetzten Richtungen belastet,
● mit einer elektrisch steuerbaren Druckbereitstellungseinrichtung (2), die eine Hochdruckquelle (29, 30) aufweist und die sowohl ein Befüllen des Zwischenraums (22) mit Druckmittel als auch dessen Entleeren ermöglicht, sowie
● mit einer Ventileinrichtung (50), mit der der im Zwischenraum (22) eingesteuerte Druck veränderbar ist,
wobei die Mittel zum Koppeln der Bewegungen des ersten (11) und des zweiten Kolbens (12) bei fehlender Druckversorgung automatisch aktiv und durch den von der Druckbereitstellungseinrichtung (2) bereit gestellten hydraulischen Druck deaktivierbar sind und einen weiteren Kolben (61;63,64) umfassen, der mit dem von der Druckbereitstellungseinrichtung (2) bereit gestellten hydraulischen Druck beaufschlagbar ist und der eine Bewegung des ersten Kolbens (11) im Sinne der Betätigung des Pedalwegsimulators (42, 43) ermöglicht bzw. verhindert.

2. Bremsanlage nach Anspruch 1, **dadurch gekennzeichnet, dass** der weitere Kolben (61) entgegen der Betätigungsrichtung des ersten Kolbens (11) mittels einer Druckfeder (59) vorgespannt ist.

3. Bremsanlage nach Anspruch 2, **dadurch gekennzeichnet, dass** der weitere Kolben (61) im zweiten Kolben (12) einen Druckraum (60) begrenzt, so dass eine Druckmittelzufuhr in diesen Raum eine Verschiebung des Kolbens und eine Kompression der Druckfeder (59) bewirkt.

4. Bremsanlage nach Anspruch 3, **dadurch gekennzeichnet, dass** der Druckraum (60) an die Hochdruckquelle (30) angeschlossen ist.

5. Bremsanlage nach Anspruch 4, **dadurch gekennzeichnet, dass** die Druckfeder (59) im Druckraum (60) angeordnet ist.

6. Bremsanlage nach einem der Ansprüche 1 bis 5, **dadurch gekennzeichnet, dass** der weitere Kolben (61) als ein Ringkolben ausgeführt ist, der koaxial zum ersten (11) sowie zum zweiten Kolben (12) angeordnet ist.

7. Bremsanlage nach Anspruch 6, **dadurch gekennzeichnet, dass** der Ringkolben (61) auf einer Führung (13) des zweiten Kolbens (12) verschiebbar geführt ist.

8. Bremsanlage nach einem der Ansprüche 1 bis 7, **dadurch gekennzeichnet, dass** die Ventileinrichtung (50) im zweiten Kolben (12) integriert ist.

9. Bremsanlage nach Anspruch 8, **dadurch gekennzeichnet, dass** die Ventileinrichtung (50) als ein Schieberventil ausgebildet ist.

10. Bremsanlage nach Anspruch 8 oder 9, **dadurch gekennzeichnet, dass** die Ventileinrichtung (50) durch einen von der Druckbereitstellungeinrichtung (2) elektronisch geregelten Vorsteuerdruck elektrohydraulisch sowie durch den ersten Kolben (11) mechanisch betätigbar ist.

11. Bremsanlage einem der Ansprüche 2 bis 4, **dadurch gekennzeichnet, dass** mehrere weitere Kolben (63, 64) vorgesehen sind, die im zweiten Kolben (12) in regelmäßigen Winkelabständen rund um die Symmetrieachse des zweiten Kolben (12) angeordnet sind und mit dem von der Druckbereitstellungseinrichtung (2) bereit gestellten hydraulischen Druck in Betätigungsrichtung beaufschlagt werden.

12. Bremsanlage nach Anspruch 11, **dadurch gekennzeichnet, dass** die weiteren Kolben (63, 64) mit einer ringförmigen Kraftübertragungsscheibe (65) zusammenwirken, die eine Bewegung des ersten Kolbens (11) im Sinne der Betätigung des Pedalwegsimulators (42, 43) ermöglicht bzw. verhindert.

13. Bremsanlage nach Anspruch 12, **dadurch gekennzeichnet, dass** die weiteren Kolben (63, 64) entgegen der Betätigungsrichtung des ersten Kolbens (11) mittels einer Druckfeder (66) vorgespannt sind, die im Inneren des zweiten Kolbens (12) koaxial zum ersten Kolben (11) angeordnet ist.

14. Bremsanlage nach einem der vorhergehenden Ansprüche **dadurch gekennzeichnet, dass** die Druckbereitstellungseinrichtung (2) elektrisch steuerbare Druckregelventile (35, 36, 37) enthält.

15. Bremsanlage nach Anspruch 14, **dadurch gekennzeichnet, dass** ein Wegsensor (19) zum Erfassen der Position und Bewegung des ersten Kolbens (11) vorgesehen ist, dessen Ausgangssignal einer elektronischen Steuereinheit (33) zugeführt wird und der Ansteuerung der Druckregelventile (35 - 37) dient.

16. Bremsanlage nach Anspruch 15, **dadurch gekennzeichnet, dass** ein Drucksensor (24) zum Erfassen des von der Druckbereitstellungseinrichtung (2) abgegebenen hydraulischen Druckes vorgesehen ist, dessen Ausgangssignal der elektronischen Steuereinheit (33) zugeführt wird.

17. Bremsanlage nach einem der vorhergehenden Ansprüche, **dadurch gekennzeichnet, dass** die Druckbereitstellungseinrichtung (2) einen hydraulischen Hochdruckspeicher (29) enthält.

18. Bremsanlage nach Anspruch 17, **dadurch gekennzeichnet, dass** der hydraulische Hochdruckspeicher durch ausreichend dimensionierte Federn (59, 66) und Druckräume (60) gebildet wird.

19. Bremsanlage nach Anspruch **15, dadurch gekennzeichnet, dass** die elektronische Steuereinheit (33) der Druckbereitstellungeinrichtung (2) zugeordnet ist.

20. Bremsanlage nach einem der vorangegangenen Ansprüche, **dadurch gekennzeichnet, dass** die Bremsanlage ein elektrisch steuerbares Radbremsdruckmodulationsmodul (4) aufweist, unter dessen Zwischenschaltung die Radbremsen (5 - 8) mit hydraulischem Druckmittel versorgt werden und dem eine elektronische Steuer- und Regeleinheit (41) zugeordnet ist.

21. Bremsanlage nach Anspruch 19 und 20, **dadurch gekennzeichnet, dass** die elektronische Steuereinheit (33) der Druckbereitstellungeinrichtung (2) und die elektronische Steuereinheit (41) des Radbremsdruckmodulationsmoduls (4) eine Baueinheit bilden bzw. zu einer gemeinsamen Steuereinheit zusammengefasst sind.

22. Bremsanlage nach Anspruch 21, **dadurch gekennzeichnet, dass** die Druckbereitstellungeinrichtung (2) und das Radbremsdruckmodulationsmodul (4) eine Baueinheit bilden.

## Claims

1. Brake system for motor vehicles, with
- a master cylinder (3) to which wheel brake cylinders (5, 6, 7, 8) are connectable,
- a first piston (11) which is coupled to a brake pedal (9) via a push rod (10) transmitting actuating forces,
- a second piston (12) which can be actuated by the first piston (11) and which can be brought into force-transmitting connection to
- a third piston (14), via which the master cylinder (3) is actuated,
- at least one elastic element (42, 43) which forms a pedal travel simulator which, in the "brake-by-wire" operating mode, gives the vehicle driver a pleasant pedal sensation,
- means for coupling the movements of the first and of the second piston, with the result that the pedal travel simulator is switched on or switched off,
- an interspace (22), capable of being acted upon with hydraulic pressure, between the second (12) and the third (14) piston, the action of pressure upon the interspace (22) loading the second and the third piston (12, 14) in opposite directions,
- an electrically controllable pressure supply device (2) which has a high-pressure source (29, 30) and which allows both a filling of the interspace (22) with pressure medium and the emptying thereof, and
- a valve device (50), by means of which the pressure fed in the interspace (22) can be varied,
wherein the means for coupling the movements of the first (11) and of the second (12) piston are automatically active in the event of an absent pressure supply and can be deactivated by the hydraulic pressure provided by the pressure supply device (2) and comprise a further piston (61; 63; 64), which can be acted upon with the hydraulic pressure provided by the pressure supply device (2) and which allows a movement of the first piston (11) with the effect of the actuation of the pedal travel simulator (42, 43) or prevents such a movement.

2. Brake system according to Claim 1, **characterized in that** the further piston (61) is prestressed counter to the direction of actuation of the first piston (11) by means of a compression spring (59).

3. Brake system according to Claim 2, **characterized in that** the further piston (61) delimits a pressure space (60) in the second piston (12), so that the supply of pressure medium into this space causes a displacement of the piston and a compression of the compression spring (59).

4. Brake system according to Claim 3, **characterized in that** the pressure space (60) is connected to the high-pressure source (30).

5. Brake system according to Claim 4, **characterized in that** the compression spring (59) is arranged in the pressure space (60).

6. Brake system according to one of Claims 1 to 5, **characterized in that** the further piston (61) is designed as an annular piston which is arranged coaxially to the first (11) and to the second (12) piston.

7. Brake system according to Claim 6, **characterized in that** the annular piston (61) is guided displaceably on a guide (13) of the second piston (12).

8. Brake system according to one of Claims 1 to 7, **characterized in that** the valve device (50) is integrated in the second piston (12).

9. Brake system according to Claim 8, **characterized in that** the valve device (50) is designed as a slide valve.

10. Brake system according to Claim 8 or 9, **characterized in that** the valve device (50) can be actuated electrohydraulically by a pilot control pressure regulated electronically by the pressure supply device (2) and can be actuated mechanically by the first piston (11).

11. Brake system according to one of Claims 2 to 4, **characterized in that** a plurality of further pistons (63, 64) are provided, which are arranged in the second piston (12) at regular angular intervals around the axis of symmetry of the second piston (12) and which are acted upon in the direction of actuation by the hydraulic pressure provided by the pressure supply device (2).

12. Brake system according to Claim 11, **characterized in that** the further pistons (63, 64) cooperate with an annular force transmission disk (65) which allows a movement of the first piston (11) with the effect of the actuation of the pedal travel simulator (42, 43) or prevents such a movement.

13. Brake system according to Claim 12, **characterized in that** the further pistons (63, 64) are prestressed counter to the direction of actuation of the first piston (11) by means of a compression spring (66) which is arranged inside the second piston (12) coaxially to the first piston (11).

14. Brake system according to one of the preceding claims, **characterized in that** the pressure supply device (2) contains electrically controllable pressure-regulating valves (35, 36, 37).

15. Brake system according to Claim 14, **characterized in that** a travel sensor (19) for detecting the position and movement of the first piston (11) is provided, the output signal from which is fed to an electronic control unit (33) and serves for activating the pressure-regulating valves (35-37).

16. Brake system according to Claim 15, **characterized in that** a pressure sensor (24) for detecting the hydraulic pressure discharged by the pressure supply device (2) is provided, the output signal from which is fed to the electronic control unit (33).

17. Brake system according to one of the preceding claims, **characterized in that** the pressure supply device (2) contains a hydraulic high-pressure accumulator (29).

18. Brake system according to Claim 17, **characterized in that** the hydraulic high-pressure accumulator is formed by sufficiently dimensioned springs (59, 66) and pressure spaces (60).

19. Brake system according to Claim 15, **characterized in that** the electronic control unit (33) is assigned to the pressure supply device (2).

20. Brake system according to one of the preceding claims, **characterized in that** the brake system has an electrically controllable wheel brake pressure modulation module (4), with the interposition of which hydraulic pressure medium is supplied to the wheel brakes (5 - 8) and which is assigned an electronic control and regulation unit (41).

21. Brake system according to Claims 19 and 20, **characterized in that** the electronic control unit (33) of the pressure supply device (2) and the electronic control unit (41) of the wheel brake pressure modulation module (4) form a structural unit or are combined into a common control unit.

22. Brake system according to Claim 21, **characterized in that** the pressure supply device (2) and the wheel brake pressure modulation module (4) form a structural unit.

## Revendications

1. Système de freinage pour véhicules automobiles, comprenant :
- un maître-cylindre (3) auquel peuvent être raccordés des cylindres de frein de roue (5, 6, 7, 8),
- un premier piston (11) qui est accouplé à une pédale de frein (9) par le biais d'une tige de pression (10) transmettant les forces d'actionnement,
- un deuxième piston (12) qui peut être actionné par le premier piston (11) et qui peut être amené en liaison de transfert de force avec
- un troisième piston (14), par le biais duquel le maître-cylindre (3) est actionné,
- avec au moins un élément élastique (42, 43) qui forme un simulateur de course de pédale qui, dans le mode de fonctionnement de "freinage électronique", donne au conducteur du véhicule une impression confortable au niveau de la pédale,
- avec des moyens pour l'accouplement des mouvements du premier et du deuxième piston, de sorte qu'il en résulte une mise en marche ou une déconnexion du simulateur de course de pédale,
- avec un espace intermédiaire (22) pouvant être sollicité avec une pression hydraulique, entre le deuxième (12) et le troisième (14) piston, une sollicitation par pression de l'espace intermédiaire (22) sollicitant le deuxième et le troisième piston (12, 14) dans des directions opposées,
- avec un dispositif de fourniture de pression (2) à commande électrique, qui présente une source de haute pression (29, 30) et qui permet à la fois un remplissage de l'espace intermédiaire (22) avec du fluide sous pression ainsi que sa vidange, et
- avec un dispositif de soupape (50) avec lequel la pression introduite dans l'espace intermédiaire (22) peut être modifiée,
les moyens pour l'accouplement des mouvements du premier (11) et du deuxième (12) piston, en cas de panne d'alimentation en pression, étant automatiquement activés et pouvant être désactivés par la pression hydraulique fournie par le dispositif de fourniture de pression (2), et comprenant un piston supplémentaire (61 ; 63 ; 64), qui peut être sollicité avec la pression hydraulique fournie par le dispositif de fourniture de pression (2) et qui permet ou empêche un mouvement du premier piston (11) dans le sens de l'actionnement du simulateur de pédale (42, 43).

2. Système de freinage selon la revendication 1, **caractérisé en ce que** le piston supplémentaire (61) est précontraint à l'encontre de la direction d'actionnement du premier piston (11) au moyen d'un ressort de pression (59).

3. Système de freinage selon la revendication 2, **caractérisé en ce que** le piston supplémentaire (61) limite dans le deuxième piston (12) un espace de pression (60) de telle sorte qu'une alimentation en fluide de pression dans cet espace provoque un déplacement du piston et une compression du ressort de pression (59).

4. Système de freinage selon la revendication 3, **caractérisé en ce que** l'espace de pression (60) est raccordé à la source de haute pression (30).

5. Système de freinage selon la revendication 4, **caractérisé en ce que** le ressort de pression (59) est disposé dans l'espace de pression (60).

6. Système de freinage selon l'une quelconque des revendications 1 à 5, **caractérisé en ce que** le piston supplémentaire (61) est réalisé sous forme de piston annulaire qui est disposé coaxialement par rapport au premier (11) et au deuxième (12) piston.

7. Système de freinage selon la revendication 6, **caractérisé en ce que** le piston annulaire (61) est guidé de manière déplaçable sur un guide (13) du deuxième piston (12).

8. Système de freinage selon l'une quelconque des revendications 1 à 7, **caractérisé en ce que** le dispositif de soupape (50) est intégré dans le deuxième piston (12).

9. Système de freinage selon la revendication 8, **caractérisé en ce que** le dispositif de soupape (50) est réalisé sous forme de soupape de distribution.

10. Système de freinage selon la revendication 8 ou 9, **caractérisé en ce que** le dispositif de soupape (50) peut être actionné de manière électrohydraulique par une pression pilote régulée électroniquement par le dispositif de fourniture de pression (2) et mécaniquement par le premier piston (11).

11. Système de freinage selon l'une quelconque des revendications 2 à 4, **caractérisé en ce que** plusieurs pistons supplémentaires (63, 64) sont prévus, lesquels sont disposés à intervalles angulaires réguliers tout autour de l'axe de symétrie du deuxième piston (12) et sont sollicités dans la direction d'actionnement par la pression hydraulique fournie par le dispositif de fourniture de pression (2).

12. Système de freinage selon la revendication 11, **caractérisé en ce que** les pistons supplémentaires (63, 64) coopèrent avec un dispositif de transfert de force annulaire (65), qui permet ou empêche un mouvement du premier piston (11) dans le sens de l'actionnement du simulateur de course de pédale (42, 43).

13. Système de freinage selon la revendication 12, **caractérisé en ce que** les pistons supplémentaires (63, 64) sont précontraints à l'encontre de la direction d'actionnement du premier piston (11) au moyen d'un ressort de pression (66), qui est disposé à l'intérieur du deuxième piston (12) coaxialement au premier piston (11).

14. Système de freinage selon l'une quelconque des revendications précédentes, **caractérisé en ce que** le dispositif de fourniture de pression (2) contient des soupapes de régulation de la pression (35, 36, 37) à commande électrique.

15. Système de freinage selon la revendication 14, **caractérisé en ce qu**'un capteur de course (19) est prévu pour détecter la position et le mouvement du premier piston (11), le signal de sortie dudit capteur de course étant acheminé à une unité de commande électronique (33) et servant à commander les soupapes de régulation de pression (35 - 37).

16. Système de freinage selon la revendication 15, **caractérisé en ce qu**'un capteur de pression (24) est prévu pour détecter la pression hydraulique délivrée par le dispositif de fourniture de pression (2), le signal de sortie dudit capteur de pression étant acheminé à l'unité de commande électronique (33).

17. Système de freinage selon l'une quelconque des revendications précédentes, **caractérisé en ce que** le dispositif de fourniture de pression (2) contient un accumulateur de haute pression hydraulique (29).

18. Système de freinage selon la revendication 17, **caractérisé en ce que** l'accumulateur de haute pression hydraulique est formé par rapport à des ressorts de dimensions suffisantes (59, 66) et des espaces de pression (60).

19. Système de freinage selon la revendication 15, **caractérisé en ce que** l'unité de commande électronique (33) est associée au dispositif de fourniture de pression (2).

20. Système de freinage selon l'une quelconque des revendications précédentes, **caractérisé en ce que** le système de freinage présente un module de modulation de la pression des freins de roue (4) à commande électronique, dont l'interposition permet d'alimenter les freins de roue (5 - 8) en fluide sous pression hydraulique et auquel module est associée une unité de commande et de régulation électronique (41).

21. Système de freinage selon les revendications 19 et 20, **caractérisé en ce que** l'unité de commande électronique (33) du dispositif de fourniture de pression (2) et l'unité de commande électronique (41) du module de modulation de la pression des freins de roue (4) forment une unité structurelle ou sont réunies pour former une unité de commande commune.

22. Système de freinage selon la revendication 21, **caractérisé en ce que** le dispositif de fourniture de pression (2) et le module de modulation de la pression des freins de roue (4) forment une unité structurelle.
